# EUROPEAN PATENT APPLICATION

(11) **EP 4 672 036 A1**
(43) Date of publication of application: **31.12.2025**
(21) Application number: 24184934.8
(22) Date of filing: 27.06.2024
(51) Int. Cl.: G06F 16/955, G06T 7/73

(54) **METHOD FOR ASSIGNING DATA TO A TWO-DIMENSIONAL CODE, AND SYSTEM FOR ASSIGNING DATA TO A TWO-DIMENSIONAL CODE**

(71) Applicant: Tangar Technologies AB, 118 53 Stockholm (SE)
(72) Inventor: Nordenström, Axel, 11853 Stockholm (SE); Stenarson, Tomas, 11853 Stockholm (SE)
(74) Representative: AWA Sweden AB

(57) **Abstract**

The present disclosure relates to a computer-implemented method for assigning data to a two-dimensional code, performed by a computer server (1), comprising the steps of storing (S1) information about the two-dimensional code in a memory (11) of the computer server (1), receiving (S2) a display data request from a user equipment (2) that has scanned the two-dimensional code, checking (S3) if the two-dimensional code is indicated as active in the stored information about the two-dimensional code in the memory (11), and if the two-dimensional code is indicated as active, sending (S4) display data stored in the memory (11) and connected to the two-dimensional code to the user equipment (2).

Further disclosed is a method for assigning data to a two-dimensional code, performed by a user equipment (2), and a system for assigning data to a two dimensional code.

## Description

### Technical field

The present disclosure relates to a method for assigning data to a two-dimensional code, and a system for assigning data to a two-dimensional code.

### Background

Barcodes are used to visually represent data and are widely used in various industries and applications. For example, barcodes are used in product identification, inventory management, and data management. The specific use of barcodes can vary greatly, but they are often used to keep track of various objects and/or people.

One-dimensional barcodes visually represent data with parallel lines having different spacings and widths.

Two-dimensional barcodes visually represent data in a more complex manner, compared to one-dimensional barcodes, by using rectangular or circular patterns of two dimensions. Two-dimensional barcodes can hold more information per unit area compared to one-dimensional barcodes. Data types that two-dimensional barcodes can encode include numeric, alphanumeric, and binary data.

One type of two-dimensional barcodes are QR codes. QR codes can be read by, for example, a camera, and can encode information such as phone numbers and internet addresses.

However, QR codes are a fairly new technology and require that the users has a certain level of technical knowledge to know how to set up and use the QR codes. Hence, there is a need for an improved method that simplifies the use of QR codes.

### Summary

It is an object of the present disclosure to provide an improved solution that alleviates the mentioned drawbacks with present solutions. Furthermore, it is an object to provide a method for assigning data to a two-dimensional code, that allows for an easier use of systems comprising two-dimensional codes.

The invention is defined by the appended independent claims, with embodiments being set forth in the appended dependent claims, in the following description and in the drawings.

According to a first aspect, there is provided a method for assigning data to a two-dimensional code, performed by a computer server, comprising the steps of storing information about the two-dimensional code in a memory of the server, receiving a display data request from a user equipment that has scanned the two-dimensional code, checking if the two-dimensional code is indicated as active in the stored information about the two-dimensional code in the memory. If the two-dimensional code is indicated as active, sending display data stored in the memory and connected to the two-dimensional code to the user equipment.

The method simplifies the use of two-dimensional codes and the assigning of data to two-dimensional codes. The method may enable users with limited technical knowledge to assign data to two-dimensional codes, the only thing a user may need to know beforehand is how to scan the two-dimensional code.

The method may further simplify to connect data to a two-dimensional code. A user may acquire one or more two-dimensional codes, a code may always be inactive when acquiring. The two-dimensional code may be stored in the memory of the server before the user acquires the code. The user may then attach the two-dimensional code to an item, and acquire ownership of the code, assigning data to the code, and activate the code.

The two-dimensional code may be a QR-code, an Aztec code, or a data matrix.

The computer server may be a cloud server.

The user equipment may be a mobile phone, a smart phone, a handheld computer or a tablet device.

By "scan", "scanning" or "scanned" it may be meant that a user scans the two-dimensional code using a dedicated app on the user equipment for scanning codes, or using a camera app on the user equipment for scanning or taking a photo of the two-dimensional code.

By "display data" it may be meant virtual text, images, graphics, 3D-objects, 3D-models, videos, webpages, audio or visualizations of events.

If the two-dimensional code is indicated active, the method may further comprise the steps of receiving user data from the user equipment, checking if the user data is connected to an ownership of the two-dimensional code. If the user data is connected to an ownership of the two dimensional code, sending edit option data to the user equipment such that the option to edit data connected to the two-dimensional code is enabled on the user equipment.

By "user data" it may be meant data that identifies a user-ID. The user-ID may be connected to a user of an account connected to performing the method according to the claims, e.g. by being connected and administrated on the server.

A user may be an owner of one or more two-dimensional codes. Being owner of a two-dimensional code may indicate that the user account is connected to the two-dimensional code and that the owner is authorized to add and edit display data connected to the two-dimensional code, and to activate the two-dimensional code.

If the two-dimensional code is not indicated as active, the method may further comprise the steps of checking if the two-dimensional code has an owner by checking the stored information about the two-dimensional code in the memory, sending an indication that the two-dimensional code is not active to the user equipment, and receiving user data from the user equipment.

By the two-dimensional code not being indicated as active it may be meant that either displayed data is stored in the stored information, but the display data is not supposed to be sent to the user equipment, or it may be meant that no display data connected to the two-dimensional code is stored on the computer server.

If the two-dimensional code is not indicated as active and the two-dimensional code does not have an owner, the method may further comprise the steps of assigning an ownership of the two-dimensional code using the user data received from the user equipment, receiving display data from the user equipment, and storing the display data in the memory of the server such that the display data is added or connected to the two-dimensional code.

By the two-dimensional code not having an owner it may be meant that no authorized user-ID of corresponding user data is connected to the two-dimensional code in the memory of the server.

When the server assigns an ownership of the two-dimensional code, it may be assigned to a user being connected to a user-ID indicated in the user data. The connection between the two-dimensional code and the user-ID may be stored on the server.

If the two-dimensional code is not indicated as active and the two-dimensional code has an owner, the method may further comprise the steps of checking if the user data sent from the user equipment is connected to an ownership of the two-dimensional code. If the user data is connected to the ownership of the two-dimensional code, the method may further comprise the steps of receiving display data from the user equipment, and storing the display data in the memory of the server such that the display data is added or connected to the two-dimensional code.

The method may further comprise the steps of sending activation option data to the user equipment such that the option to activate the two-dimensional code is enabled on the user equipment.

The steps of receiving the display data from the user equipment may further comprise:
A1. receiving user equipment position and orientation data in 3D space from the user equipment,
B1. receiving a captured image of the two-dimensional code from the user equipment,
C1. calculating a position and orientation of the two-dimensional code relative to the position and orientation of the user equipment, and
D1. calculating a position and orientation of the two-dimensional code in 3D space.

If the position and orientation of the two-dimensional code is not found, the steps of A1-D1 may be repeated until a position and orientation is found.

The steps of receiving and storing the display data in the memory may allow for assigning data to a two-dimensional code, and may allow for the two-dimensional code to be connected to display data for displaying on a user equipment to a user.

By that "the position and orientation of the two-dimensional code is not found" it may be mean that the position and orientation of the two-dimensional code has been calculated and the computer system has determined that the calculated position and orientation of the two-dimensional code was not accurate enough. The computer server may determine if the position and orientation is accurate enough by, for example, performing calculations and ensuring that the calculated position and orientation is above a threshold. This may ensure that if any error occurs during steps A1 - D1, the error is found and corrected by repeating steps A1 - D1.

Repeating the steps may be caused by, for example, bad quality image received, or incorrect position received.

The step of receiving display data from the user equipment and storing the display data in the memory may further comprise receiving a position and orientation in 3D space of the display data to be added or connected to the two-dimensional code, calculating the position and orientation of the display data relative to the position and orientation of the two-dimensional code, and storing the position and orientation of the display data relative to the position and orientation of the two dimensional code in the memory.

The position and orientation of the user equipment may be received from the user equipment more than one time. The position and orientation of the user equipment may be received from the user equipment continuously during the steps of receiving and storing the display data.

The step of sending display data stored in the memory and connected to the two-dimensional code to the user equipment may further comprise:
A2. receiving user equipment position and orientation data in 3D space from the user equipment,
B2. receiving a captured image of the two-dimensional code from the user equipment,
C2. calculating a position and orientation of the two-dimensional code relative to the position and orientation of the user equipment, and
D2. calculating a position and orientation of the two-dimensional code in 3D space.

If the position and orientation of the two-dimensional code is not found, the steps of A2-D2 may be repeated until a position and orientation of the two-dimensional code is found.

Repeating the steps may be caused by, for example, bad quality image received, or incorrect position received.

The step of sending display data stored in the memory and connected to the two-dimensional code to the user equipment may further comprise retrieving display data connected to the two-dimensional code stored in the memory of the server, calculate a position an orientation for the display data in 3D space based on a position and orientation of the display data in relation to the two-dimensional code and the position and orientation of the two-dimensional code in 3D space, and sending the display data to the user equipment.

The position and orientation of the user equipment may be received from the user equipment more than one time. The position and orientation of the user equipment may be received from the user equipment continuously during the steps of receiving and storing the display data.

According to a second aspect, there is provided a method for assigning data to a two-dimensional code, performed by a user equipment, the method comprising the steps of scanning the two-dimensional code,
sending a display data request to a server that stores information about the two-dimensional code, if the server sends display data to the user equipment, receiving the display data from the server, and displaying the display data on a display of the user equipment.

When the user equipment scans the two-dimensional code, a question to the user of the user equipment may be displayed on a screen of the user equipment. The question may invite the user to present display data on the screen connected to the two-dimensional code. When the user accepts the question, e.g. by clicking on a link displayed on the screen, this may activate the next step, sending the display data request.

If the server sends display data to the user equipment, the method may further comprise the steps of sending user data to the server, if the server sends edit option data to the user equipment, receiving edit option data from the server, and displaying the option to edit data connected to the two-dimensional code stored in the server.

The edit option data may be displayed on the screen of the user equipment, so that a user may choose to interact with the displayed option and to either accept or deny the option.

The method may further comprise the steps of receiving an indication that the two-dimensional code is not active, sending user data to the server, and sending display data to the server.

The method may further comprise the steps of receiving activation option data from the server, and displaying the option to activate the two-dimensional code.

The activation option data may be displayed on the screen of the user equipment, so that a user may choose to interact with the displayed option and to either accept or deny the option.

The step of sending display data may further comprise:
A3. tracking a position and orientation of the user equipment in 3D space,
B3. capturing an image of the two-dimensional code,
C3. calculating a position and orientation of the two-dimensional code relative to the position and orientation of the user equipment, and
D3. calculating a position and orientation of the two-dimensional code in 3D space.

If the position and orientation of the two-dimensional code is not found, the steps of A3-D3 may be repeated until a position and orientation is found.

The steps of sending display data may allow for assigning display data to a two-dimensional code, and may allow for the two-dimensional code to be connected to display data for displaying on a user equipment to a user.

Repeating the steps may be caused by, for example, bad quality image received, or incorrect position received.

The step of sending display data to the server may further comprise calculating the position and orientation of the display data relative to the position and orientation of the two-dimensional code, sending the position and orientation of the display data relative to the position orientation and orientation of the two dimensional code to the server.

The position and orientation of the user equipment may be tracked more than one time. The position and orientation of the user equipment may be tracked continuously during the steps of sending display data.

The step of receiving display data from the server may further comprise:
A4. tracking a position and orientation of the user equipment in 3D space,
B4. capturing an image of the two-dimensional code,
C4. calculating a position and orientation of the two-dimensional code relative to the position and orientation of the user equipment, and
D4. calculating a position and orientation of the two-dimensional code in 3D space.

The step of receiving display data may comprise receiving display data that is based on the position and orientation of the two-dimensional code in 3D space from the server.

If the position and orientation of the two-dimensional code is not found, the steps of A4-D4 may be repeated until a position and orientation is found.

The calculation of the position and orientation of the two-dimensional code relative to the position and orientation of the user equipment may be made based on image data and that the two-dimensional code is visible in the image, thereby may the position of the two-dimensional code may be calculated in relation to a camera of the user equipment.

The calculation of the position and orientation of the two-dimensional code in 3D space may be made using the tracked position and orientation of the user equipment and the known position and orientation of the two-dimensional code in relation to the user equipment.

The step of receiving display data from the server may further comprise reading content of the display data, calculate a position and orientation for the display data in 3D space based on a position and orientation of the display data in relation to the two-dimensional code and the position and orientation of the two-dimensional code in 3D space, and displaying the display data on a display of the user equipment.

The position and orientation of the user equipment may be tracked more than one time. The position and orientation of the user equipment may be tracked continuously during the steps of receiving display data.

The display data may be displayed on a screen or display of the user equipment. The display data may be an image, text, 3D-model or other, and may be displayed to the user on the screen when the user aligns the user equipment so that the user equipment is in the right position and orientation. The user may then see a movable view of the actual surrounding ant the display data on the screen.

According to a third aspect, there is provided a system for assigning data to a two-dimensional code, the system comprising a two-dimensional code configured to be scanned by a user equipment, and a computer server. The computer server comprising a memory configured to store information about the two-dimensional code, and display data connected to the two-dimensional code. The server is configured to receive a display data request from a user equipment that has scanned the two-dimensional code, check if the two-dimensional code is indicated as active in the stored information about the two-dimensional code in the memory, and if the two-dimensional code is indicated as active, send the display data stored in the memory to the user equipment.

According to a fourth aspect, there is provided a system for assigning data to a two dimensional code, the system comprising a two-dimensional code configured to be scanned by a user equipment, a computer server, and a user equipment. The computer server comprising a memory configured to store information about the two-dimensional code, and display data connected to the two-dimensional code.

The server is configured to receive a display data request from the user equipment when the user equipment has scanned the two-dimensional code, check if the two-dimensional code is indicated as active in the stored information, and if the two-dimensional code is indicated as active, send the display data stored in the memory to the user equipment.

The user equipment is configured to scan the two-dimensional code,
send a display data request to the server, if the server sends display data to the user equipment, receive the display data from the server, and
display the display data.

The system may be a system for displaying virtual text, images, 3D-figures or visualizations of events to a user using a user equipment.

The system may be a lost-and-found system. A code may be able to attach to a clothing, equipment or other belonging to a user. The user may be assigned as an owner of the two-dimensional code and the display data may be name, phone number, email address or other contact details to the owner. If someone finds the lost item and scans the two-dimensional code, the finder may be presented with the contact details and/or a website or app for direct sending an alert or message to the owner.

### Brief description of the drawings

The invention will in the following be described in more detail with reference to the enclosed drawings, wherein:
Fig. 1 schematically illustrate a method for assigning data to a two-dimensional code, performed by a computer server;
Figs 2a-2b schematically illustrates a computer server and a user equipment;
Fig. 3 schematically illustrate the communication between the user equipment and the server;
Fig. 4 schematically illustrates the communication between the user equipment and the computer server if the two-dimensional code is not indicated as active;
Fig. 5 schematically illustrates the communication between the user equipment and the computer server if the two-dimensional code is not active and has an assigned owner;
Fig. 6 schematically illustrates the communication between the user equipment and the computer server in the steps of receiving and storing display data according to one embodiment;
Fig. 7 schematically illustrates the communication between the user equipment and the computer server in the steps of sending display data according to one embodiment;
Fig. 8 schematically illustrates the communication between the user equipment and the computer server in the steps of sending display data stored in a memory according to one embodiment;
Fig. 9 schematically illustrates the communication between the user equipment and the computer server in the steps of receiving display data stored in a memory according to one embodiment.
Fig. 10 schematically illustrates the calculation of the position and orientation of the two-dimensional code in 3D space.
Fig. 11 schematically illustrates the calculation of the position and orientation of the display data relative the two-dimensional code.
Fig. 12 schematically illustrates the calculation of the position and orientation of the display data in 3D space.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

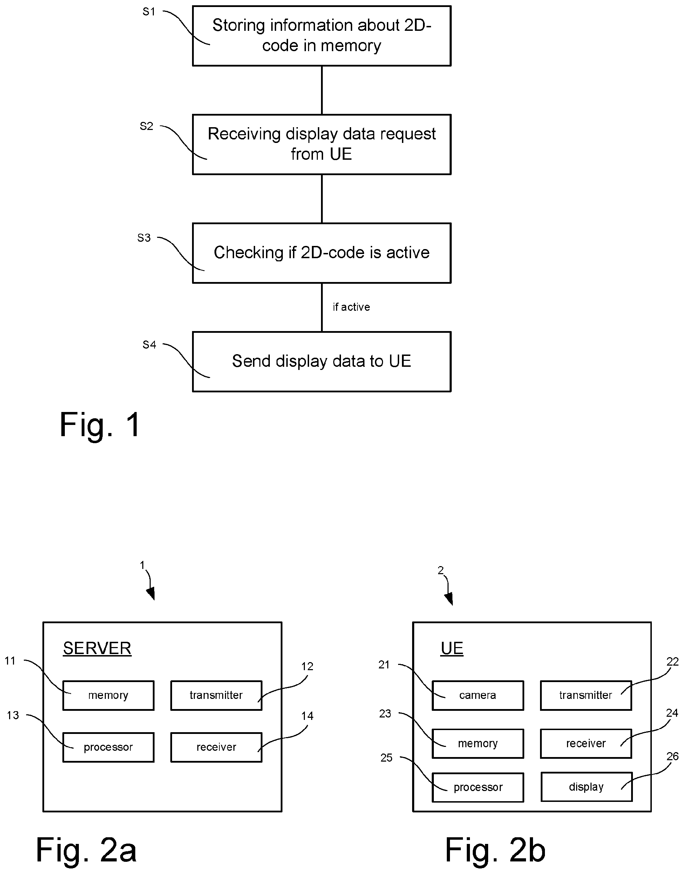

Fig. 1 schematically illustrate a method for assigning data to a two-dimensional code. The method is performed by a computer server 1 according to one embodiment. The method comprises storing information about the two-dimensional code in a memory 11 of the server 1. The method may comprise a step of the user equipment 2 scanning the two-dimensional code.

Fig. 2a schematically illustrates the computer server 1. The computer server 1 may be a cloud server 1. The computer server 1 may comprise any of a processor 13, a transmitter 12, a receiver 14, and memory 11. The computer server 1 may communicate with the user equipment 2 through 4G, 5G, and/or WLAN or the like.

Fig. 2b schematically illustrate the user equipment 2. The user equipment 2 may be a mobile phone. The mobile phone may be a smart phone. The user equipment 2 may be a tablet device or a handheld computer. The two-dimensional code may be scanned by a camera 21 of the user equipment 2.

As shown in Fig. 2b, the user equipment 2 may comprise any of a camera 21, a transmitter 22, a receiver 24, a processor 25, and a memory 23. The user equipment 2 may further comprise a display 26 configured to display, for instance, a camera view, data received and/or transmitted from/to the computer server 1, an option to edit data stored in the memory 11 of the computer server 1, and/or an option to activate the two-dimensional code.

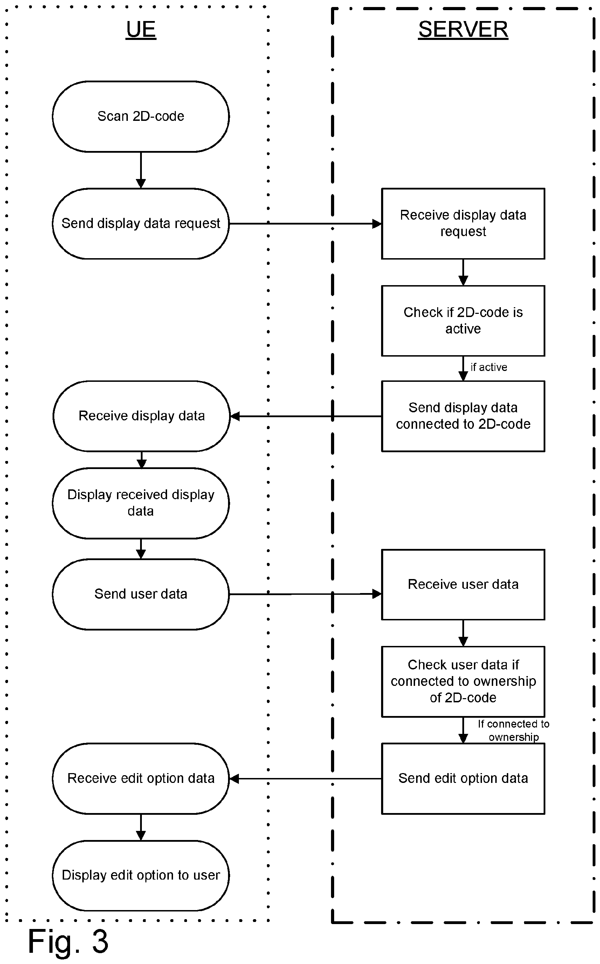

Fig. 3 schematically illustrate the communication between the user equipment 2 and the server 1. The method comprises the user equipment 2 sending a display data request to the computer server 1. The method comprises the computer server 1 receiving the display data request from the user equipment 2. The method is performed by a computer server 1 according to one embodiment. The method is performed by a user equipment 2 according to one embodiment.

The method comprises the computer server 1 checking if the two-dimensional code is indicated as active in the stored information about the two-dimensional code in the memory 11. If the two-dimensional code is indicated as active, the method comprises the computer server 1 sending display data stored in the memory 11 and connected to the two-dimensional code to the user equipment 2. If the server 1 sends display data to the user equipment 2, the method comprises the user equipment 2 receiving display data from the server 1. The method comprises the user equipment 2 displaying the display data.

If the server 1 sends display data to the user equipment 2, the method may comprise the user equipment 2 sending user data to the computer server 1. If the two-dimensional code is indicated active, the method may comprise the computer server 1 receiving user data from the user equipment 2. If the two-dimensional code is indicated active, the method may comprise the computer server 1 checking if the user data is connected to an ownership of the two-dimensional code.

If the two-dimensional code is indicated active and if the user data is connected to an ownership of the two dimensional code, the method may comprise the computer server 1 sending edit option data to the user equipment 2. If the computer server 1 sends edit option data to the user equipment 2, the method may comprise the user equipment 2 receiving edit option data from the computer server 1. The method may comprise the user equipment 2 enabling the option to edit data connected to the two-dimensional code stored in the computer server 1 on the user equipment 2.

The two-dimensional code may be indicated as either active or inactive in the stored information. The computer server 1 may only send the display data to the user equipment 2 if the two-dimensional code is indicated as active in the stored information.

The two-dimensional code may be a QR-code. The two-dimensional code may be printed, or be presented on a display. The two-dimensional code may be printed to a sticker.

The two-dimensional code may correspond to an ID or URL that has been generated by the computer server 1.

The display data may comprise text, image and/or a 3D model.

Scanning the two-dimensional code may open up an app or web page on a display 26 of the user equipment 2. The display data may be displayed on the app or web page. The display data may be displayed on a webpage connected to the corresponding URL of the two-dimensional code.

The user equipment 2 may display the received display data on the display 26 of the user equipment 2. The user equipment 2 may display the option to edit the data connected to the two-dimensional code on the display 26 of the user equipment 2.

The computer server 1 may check if a user-ID of the user data is connected to an ownership of the data. An authorized user-ID may be a user-ID that is logged in through the user equipment 2, known by the computer server 1, and connected to an ownership of the two-dimensional code.

The computer server 1 checking the user data ensures that only an authorized user-ID is able to edit the data connected to the two-dimensional code and stops unauthorized user-IDs from adding, editing or removing data connected to the two-dimensional code.

To edit data connected or added to the two-dimensional code may require that a user-ID is logged in through the user equipment 2 and that the user-ID is known by the computer server 1.

If no user-ID is logged in through the user equipment 2, the computer server 1 may send log in request data or registration request data to the user equipment 2. The computer server 1 may send log in request data or registration request data to the user equipment 2 before the user equipment 2 sends the user data.

The user equipment 2 may send a user-ID and a password, pin-code, biometric authentication data, or two-step authentication data to the computer server 1. The computer server 1 may receive a user-ID and a password, pin-code, biometric authentication data, or two-step authentication data such that the computer server 1 is able to authenticate the user-ID from the user equipment 2.

Only one user-ID may be connected to the ownership of the two-dimensional code. A plurality of user-IDs may be connected to an ownership of the two-dimensional code.

Editing the data connected to the two-dimensional code may comprise editing the display data connected to the two-dimensional code. Editing data connected to the two-dimensional code may comprise adding and/or removing display data connected to the two-dimensional code.

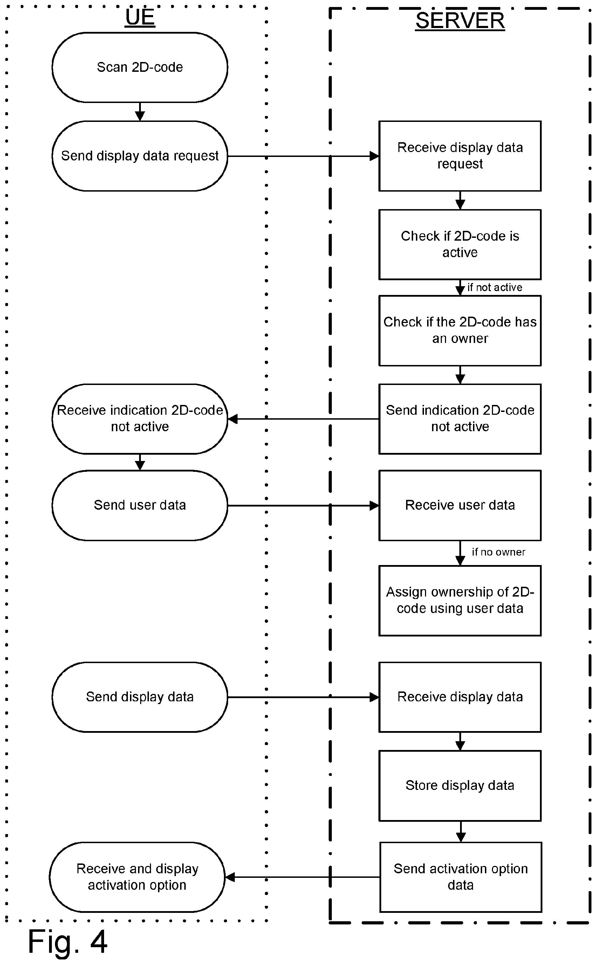

If the user data is not connected to an ownership of the two dimensional code, no edit option data may be sent to the user equipment 2
Fig. 4 schematically illustrates the communication between the user equipment 2 and the computer server 1 if the two-dimensional code is not indicated as active.

If the two-dimensional code is not indicated as active, the method may comprise the computer server 1 checking if the two-dimensional code has an owner by checking the stored information about the two-dimensional code in the memory 11. If the two-dimensional code is not indicated as active, the method may comprise the computer server 1 sending an indication that the two-dimensional code is not active to the user equipment 2. If the computer server 1 sends the indication that the two-dimensional code is not active to the user equipment 2, the method may comprise the user equipment 2 receiving the indication that the two-dimensional code is not active from the computer server 1.

If the computer server 1 sends the indication that the two-dimensional code is not active to the user equipment 2, the method may comprise the user equipment 2 sending user data to the server 1. If the two-dimensional code is not indicated as active, the method may comprise the computer server 1 receiving user data from the user equipment 2.

If the two-dimensional code is not indicated as active and the code does not have an owner, the method may comprise the computer server 1 assigning an ownership of the two-dimensional code using the user data received from the user equipment 2.

If the two-dimensional code is not indicated as active, the method may comprise the user equipment 2 sending display data to the server 1. If the two-dimensional code is not indicated as active, the method may comprise the computer server 1 receiving display data from the user equipment 2. If the two-dimensional code is not indicated as active, the method may comprise the computer server 1 storing the display data in the memory 11 of the server 1 such that the display data is added or connected to the two-dimensional code.

If the two-dimensional code is indicated as inactive and the user data is connected to the ownership of the two-dimensional code, the method may comprise the computer server 1 sending activation option data to the user equipment 2. The method may comprise the user equipment 2 receiving activation option data from the server 1. The user equipment 2 may display the option to activate the two-dimensional code. The user equipment 2 may display the option to activate the two-dimensional code on the display 26 of the user equipment 2.

The stored information may comprise user data connected to an ownership of the two-dimensional code. The stored information may comprise an authorized user-ID connected to the ownership of the two-dimensional code. The computer server 1 may check if the received user data corresponds to the user data of the stored information. The computer server 1 may send log in request data or registration request data to the user equipment 2 before the user equipment 2 sends the user data if no user-ID is logged in through the user equipment 2.

A new two-dimensional code may be indicated as inactive.

If the two-dimensional code does not have an owner, the user-ID of the user data sent from the user equipment 2 may take ownership of the two-dimensional code such that the user-ID becomes an authorized user-ID. While the ownership is assigned to the authorized user-ID, no other user-ID may take ownership of the two-dimensional code. The authorized user-ID may edit display data added or connected to the two-dimensional code.

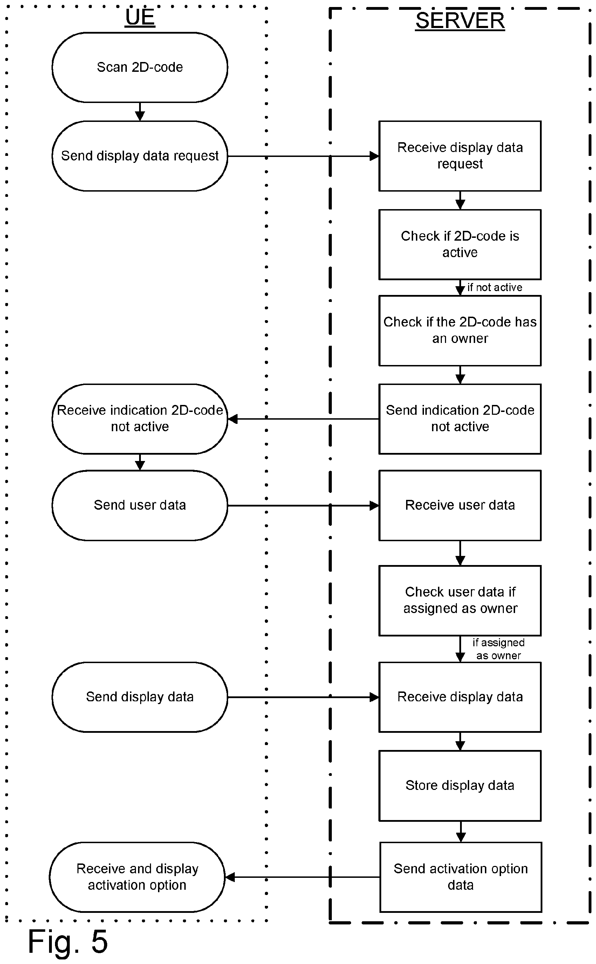

Fig. 5 schematically illustrates the communication between the user equipment 2 and the computer server 1 if the two-dimensional code is not active and has an assigned owner. If the two-dimensional code is not indicated as active and the two-dimensional code has an owner, the method may comprise the computer server 1 checking if the user data sent from the user equipment 2 is connected to an ownership of the two-dimensional code.

If the user data is connected to the ownership of the two-dimensional code, the method may comprise the computer server 1 receiving display data from the user equipment 2, and storing the display data in the memory 11 of the server 1 such that the display data is added or connected to the two-dimensional code.

The authorized user-ID have the option to add or connect data to the two-dimensional code. The authorized user-ID may edit display data added or connected to the two-dimensional code.

An inactive two-dimensional code may not give access to any data stored and connected to the two-dimensional code to any unauthorized user-ID. Only the authorized user-ID may be able to display, edit, activate, and add or connect data to the two-dimensional code when the two-dimensional code is inactive.

The option to activate the two-dimensional code may allow for the authorized user-ID to decide themselves when they want the display data to be accessible by other users. It may be possible for the authorized user-ID to add or connect data beforehand and then activate the two-dimensional code when needed, allowing for a simple and easy method for assigning data to a two-dimensional code. It may be possible for the authorized user-ID not to activate the two-dimensional code. It may be possible for the authorized user-ID to add or connect data after the two-dimensional code is activated.

The method may be a method for assigning display data to a two-dimensional code such that lost items may be retrieved. The method may facilitate retrieving back an item, for example clothes, when a user has lost the item. A two-dimensional code may be attached to the item such that a second user finding the item may scan the two-dimensional code using a second user equipment 2. The display data may comprise contact information to the user of the lost item.

The step of receiving and storing display data in the memory 11 may comprise determining which part of the display data that should be sent to the user equipment 2 in the step of sending the display data stored in the memory 11 to the user equipment 2. If the display data comprises contact information, the user may not want certain contact information to be displayed to the second user, for example, the user of the lost item may not want their phone number to be displayed to the second user.

The step of receiving and storing display data in the memory 11 may comprise receiving and storing information of how the computer server 1 should notify the user-ID owning the two-dimensional code if a second user scans the two dimensional code. The computer system may send an email or a text message to the user of the user-ID, or the computer system may display the contact information to the second user on a display 26 of the user equipment 2.

The display data may comprise information on how the second user should contact the user of the lost item.

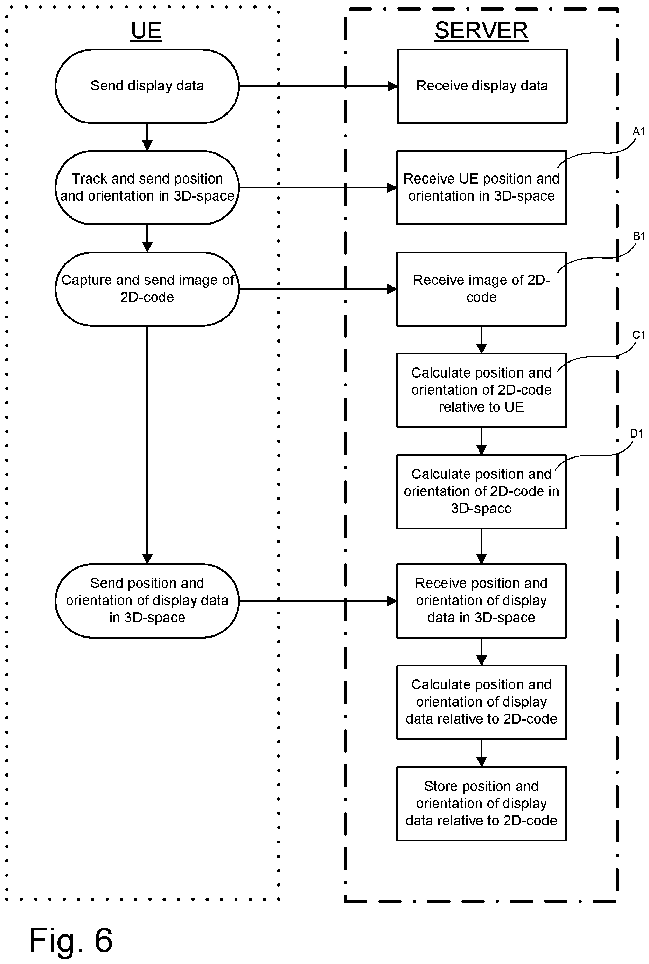

Fig. 6 schematically illustrates the communication between the user equipment 2 and the computer server 1 in the steps of receiving and storing display data according to one embodiment.

The step of the computer server 1 receiving and storing the display data in the memory 11 may comprise the steps A1: the computer server 1 receiving user equipment 2 position and orientation data in 3D space from the user equipment 2, B1: the computer server 1 receiving a captured image of the two-dimensional code from the user equipment 2, C1: the computer server 1 calculating a position and orientation of the two-dimensional code relative to the position and orientation of the user equipment 2, D1: the computer server 1 calculating a position and orientation of the two-dimensional code in 3D space. If the position and orientation of the two-dimensional code is not found, the method may comprise repeating the steps of A1-D1 until a position and orientation is found. Further the position and orientation may be stored in the memory 11.

The step of the computer server 1 receiving and storing the display data in the memory 11 may comprise receiving a position and orientation in 3D space of the display data to be added or connected to the two-dimensional code. The step of the computer server 1 receiving and storing the display data in the memory 11 may comprise calculating the position and orientation of the display data relative to the position and orientation of the two-dimensional code. The step of receiving and storing the display data in the memory 11 may comprise storing the position and orientation of the display data relative to the position and orientation of the two dimensional code in the memory 11.

The method may be used to connect data to a specific position in 2D or 3D space. The method may be used to, for example, set up user instructions in a kitchen or a laundry room, set up a checklist to ensure devices are turned off in a room, set up guided tours, for art experiences, in a room. The method may be for assigning data to a two-dimensional code and to a position and orientation in 3D-space.

The computer server 1 may, in step A1 start tracking the user equipment 2 in 3D-space. The computer server 1 may continuously track the user equipment 2 in 3D-space. The user equipment 2 may send the position and orientation of the user equipment 2 to the computer server 1.

Step B1 may comprise the computer server 1 sending a camera usage request to the user equipment 2 such that the user equipment 2 automatically captures an image from a camera of the user equipment 2 and sends the image to the computer server 1. The whole two-dimensional code may be in the captured image. Part of the two-dimensional code may be in the captured image. The user equipment 2 may send the image of the two-dimensional code to the computer server 1.

Step C1 may comprise calculating a position and orientation of the two-dimensional code based on the position and orientation of the user equipment 2 and on the captured image of the two-dimensional code. Step C1 may comprise calculating the position and orientation of the two-dimensional code relative the camera of the user equipment 2.

When the position and orientation of the user equipment 2 is known and the position and orientation of the two-dimensional code relative the user equipment 2 is known, it may be possible, in step D1, to calculate the position and orientation of the two dimensional code in 3D-space.

When the position and orientation of the two-dimensional code has been calculated, the computer system may determine if the calculated position and orientation of the two-dimensional code is an acceptable calculated position and orientation of the two-dimensional code. The computer server 1 may perform calculations to determine if the calculated position and orientation of the two-dimensional code is acceptable. The calculations to determine if the calculated position and orientation of the two-dimensional code is acceptable may ensure that if any error occurs during steps A1 - D1, the error is found and corrected by repeating steps A1 - D1.

In an alternative embodiment, the method may further comprise a step of the server 1 storing the position and orientation of the two dimensional code in the memory 11.

The user equipment 2 may send the position and orientation in 3D space of the display data to be added or connected to the two-dimensional code. Receiving a position and orientation in 3D space of the display data to be added or connected to the two-dimensional code may, depending on the type of display data, be done in multiple ways. For example, if the display data comprises text or an image, the user equipment 2 may allow a user to click on the screen where they want the display data to be positioned and send the position and orientation to the computer server 1. If the display data comprises a 3D model, the user equipment 2 may display the 3D model such that a user can scale up, scale down, and turn the 3D model to position the 3D model in 3D space and send the position and orientation to the computer server 1.

The computer server 1 may only calculate and store the position and orientation of the display data relative the two-dimensional code, not the position and orientation in 3D space. The computer server 1 may store the position and orientation of the display data relative the two-dimensional code in a document in the memory 11.

The two-dimensional code may have multiple display data connected in different positions and orientations relative the two-dimensional code. For example, text may be connected to the two-dimensional code at one position and orientation, while an image may be connected to the two-dimensional code at another position and orientation.

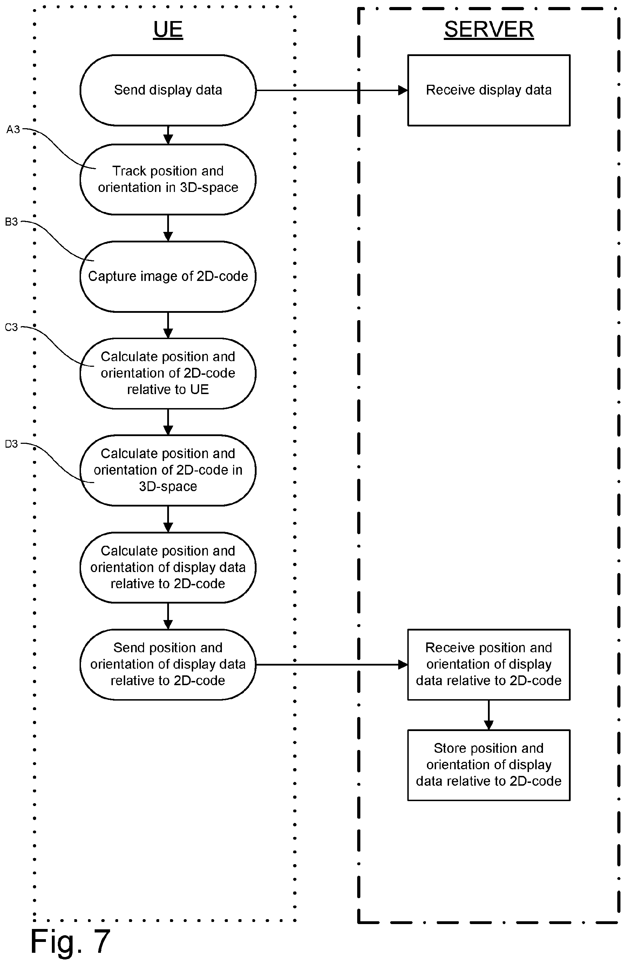

Fig. 7 schematically illustrates the communication between the user equipment 2 and the computer server 1 in the steps of the user equipment 2 sending display data according to one embodiment. The features and description described above related to the steps A1 - D1 may also be applied the steps A3 - D3. The features and description described above related to step of the computer server 1 receiving and storing the display data in the memory 11 may also be applied to the step of the user equipment 2 sending display data.

The step of the user equipment 2 sending display data may comprise A3: tracking a position and orientation of the user equipment 2 in 3D space, B3: capturing an image of the two-dimensional code, C3: calculating a position and orientation of the two-dimensional code relative to the position and orientation of the user equipment 2, and D3: calculating a position and orientation of the two-dimensional code in 3D space. If the position and orientation of the two-dimensional code is not found, the step of the user equipment 2 sending display data may comprise repeating the steps of A3-D3 until a position and orientation is found.

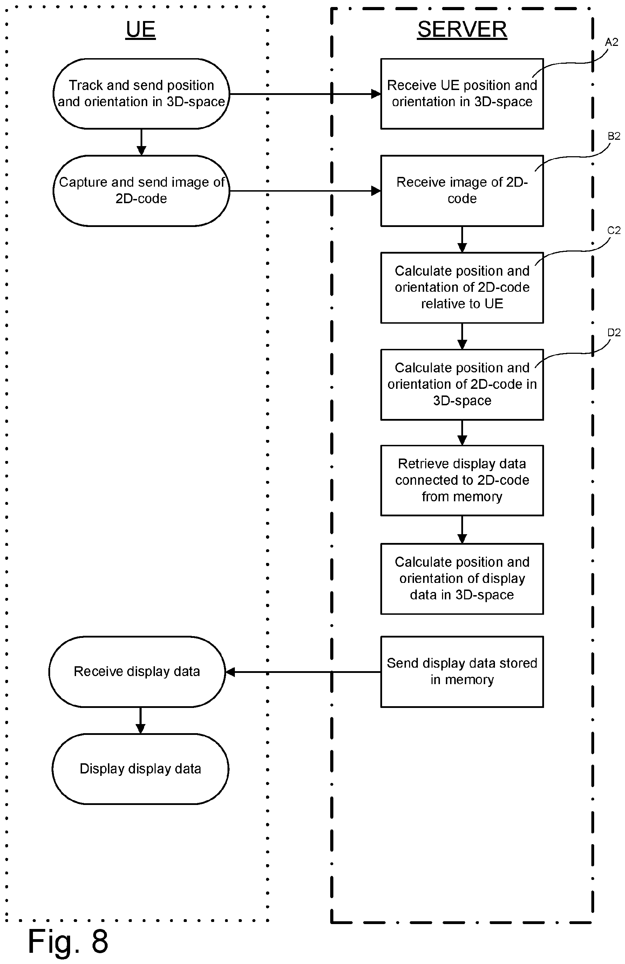

The step of the user equipment 2 sending display data to the computer server 1 may comprise calculating the position and orientation of the display data relative to the position and orientation of the two-dimensional code. The step of sending display data to the computer server 1 may comprise sending the position and orientation of the display data relative to the position orientation and orientation of the two-dimensional code to the server 1. Fig. 8 schematically illustrates the communication between the user equipment 2 and the computer server 1 in the steps the computer server 1 sending display data stored in the memory 11 according to one embodiment. The features and description described above related to the steps A1 - D1 may also be applied to the steps A2 - D2.

The step of the computer server 1 sending display data stored in the memory 11 and connected to the two-dimensional code to the user equipment 2 may comprise the steps, A2. receiving user equipment 2 position and orientation data in 3D space from the user equipment 2, B2. receiving a captured image of the two-dimensional code from the user equipment 2, C2. calculating a position and orientation of the two-dimensional code relative to the position and orientation of the user equipment 2, and D2. calculating a position and orientation of the two-dimensional code in 3D space. If the position and orientation of the two-dimensional code is not found, the method may comprise repeating the steps of A2-D2 until a position and orientation of the two-dimensional code is found.

The step of the computer server 1 sending display data stored in the memory 11 and connected to the two-dimensional code to the user equipment 2 may comprise retrieving display data connected to the two-dimensional code stored in the memory 11 of the server 1. The step of the computer server 1 sending display data stored in the memory 11 and connected to the two-dimensional code to the user equipment 2 may comprise calculating a position an orientation for the display data in 3D space based on a position and orientation of the display data in relation to the two-dimensional code and the position and orientation of the two-dimensional code in 3D space. The step of the computer server 1 sending display data stored in the memory 11 and connected to the two-dimensional code to the user equipment 2 may comprise sending the display data to the user equipment 2.

Calculating a position an orientation for the display data in 3D space based on a position and orientation of the display data in relation to the two-dimensional code and the position and orientation of the two-dimensional code in 3D space may determine where in a room the user equipment 2 should be positioned when displaying the display data.

Displaying the display data may be done in multiple ways, for example, if the display data is an image or text, the image or text may be displayed such that the image or text always faces a user using the user equipment 2. If the display data is a 3D model, the 3D model may be displayed such that the 3D model is scaled and turned in the same way as it was when the 3D model got connected to the two-dimensional code.

The user equipment 2 may guide a user of the user equipment 2 on where to move and turn the user equipment 2 such that the display data is displayed on the user equipment 2. The user equipment 2 may guide the user with the help of, for example, a compass that turns towards the display data. Guiding the user may help avoiding the display data ending up behind the user such that the user may not be able to find the display data.

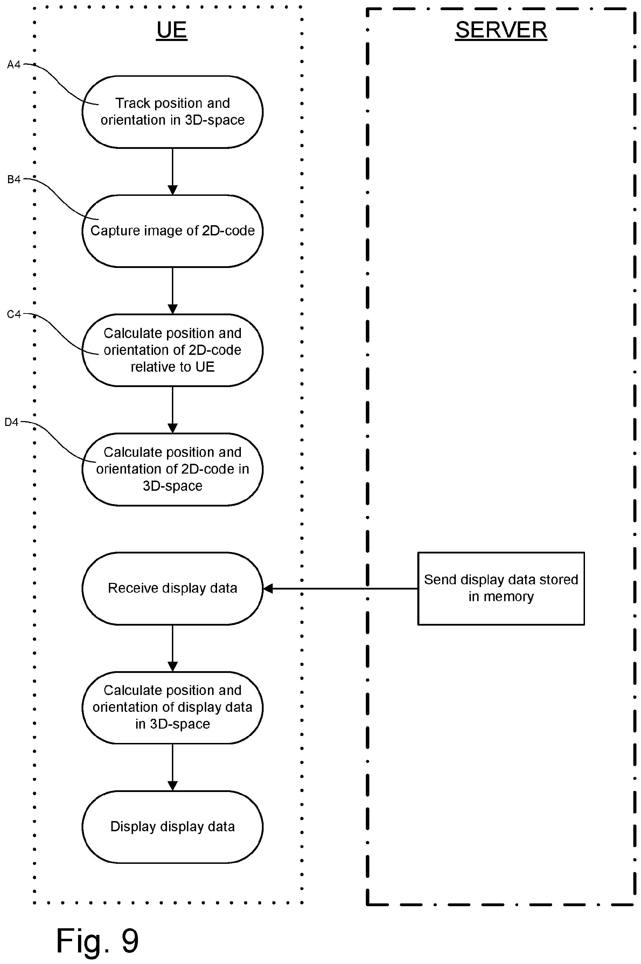

The computer server 1 may continue to retrieve display data, calculating a position an orientation for the display data in 3D space, and sending the display data to the user equipment 2 until all display data connected to the two-dimensional code and stored in the memory 11 has been sent from the computer server 1 to the user equipment 2. Fig. 9 schematically illustrates the communication between the user equipment 2 and the computer server 1 in the steps of the user equipment 2 receiving display data stored in a memory 11 according to one embodiment. The features and description described above related to the steps A1 - D1 may also be applied to the steps A4 - D4. The features and description described above related to the step of the computer server 1 sending display data stored in a memory 11 may also be applied to the step of the user equipment 2 receiving display data stored in a memory 11.

The step of the user equipment 2 receiving display data from the computer server 1 may comprise A4. tracking a position and orientation of the user equipment 2 in 3D space, B4. capturing an image of the two-dimensional code, C4. calculating a position and orientation of the two-dimensional code relative to the position and orientation of the user equipment 2, and D4. calculating a position and orientation of the two-dimensional code in 3D space. The step of receiving display data may comprise receiving display data that is based on the position and orientation of the two-dimensional code in 3D space from the server 1. If the position and orientation of the two-dimensional code is not found, the step of the user equipment 2 receiving display data from the computer server 1 may comprise repeating the steps of A4-D4 until a position and orientation is found.

The step of receiving display data from the server 1 may comprise calculating a position an orientation for the display data in 3D space based on a position and orientation of the display data in relation to the two-dimensional code and the position and orientation of the two-dimensional code in 3D space. The step of receiving display data from the server 1 may comprise displaying the display data on a display 26 of the user equipment 2.

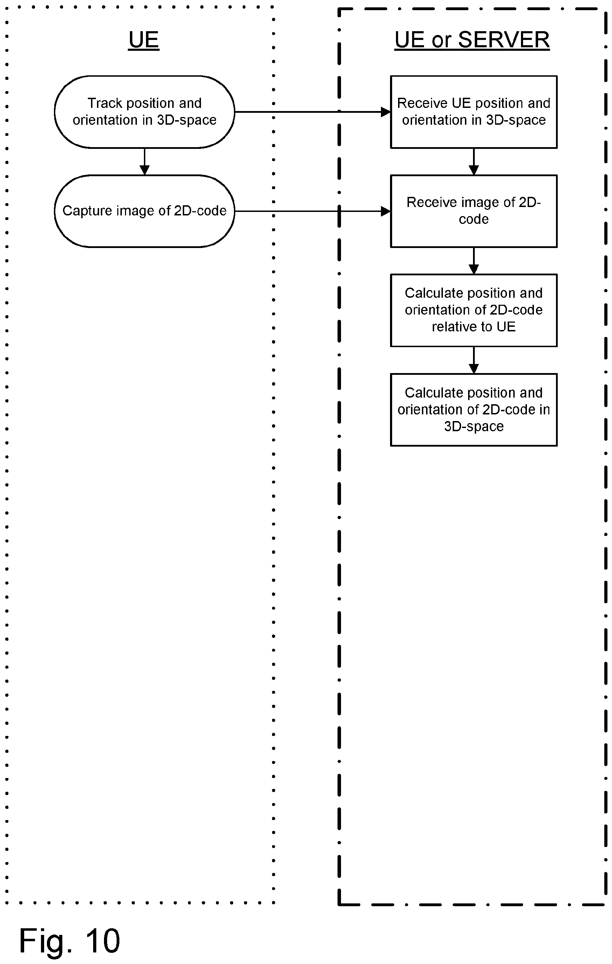

Fig. 10 - 12 schematically illustrates how the calculations of the position and orientation of the two-dimensional code and the display data may be performed by either the user equipment or the server.

As shown in Fig. 10, calculating the position and the orientation of the two-dimensional code in 3D space may be performed by the user equipment or the server.

The position and orientation of the user equipment may be tracked by the user equipment. The position and orientation of the user equipment may then be either sent to the server, or retrieved and used by the user equipment for calculating the position and orientation of the two-dimensional code in 3D space.

The user equipment may capture an image of the two-dimensional code. The captured image may then be either sent to the server, or retrieved and used by the user equipment for calculating the position and orientation of the two-dimensional code in 3D space.

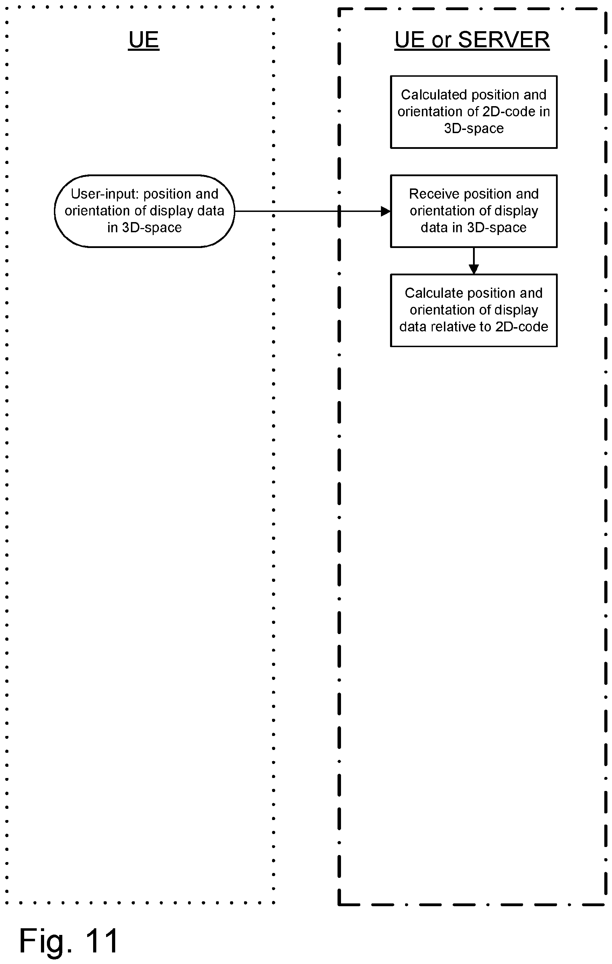

As shown in Fig. 11, calculating the position and orientation of the display data relative to the two-dimensional code may be performed by the user equipment or the server.

The calculated position and orientation of the two-dimensional code in 3D space may be saved by either the user equipment, if the user equipment performs the position and orientation calculation of the display data relative to the two-dimensional code, or the server, if the server performs the position and orientation calculation of the display data relative to the two-dimensional code.

A user may choose where they want the display data to be positioned in 3D space. The user equipment may display the option to choose a position and orientation of the display data in 3D space. The position and orientation of the display data may then be either sent to the server or retrieved and used by the user equipment for calculating the position and orientation of the display data relative to the two-dimensional code.

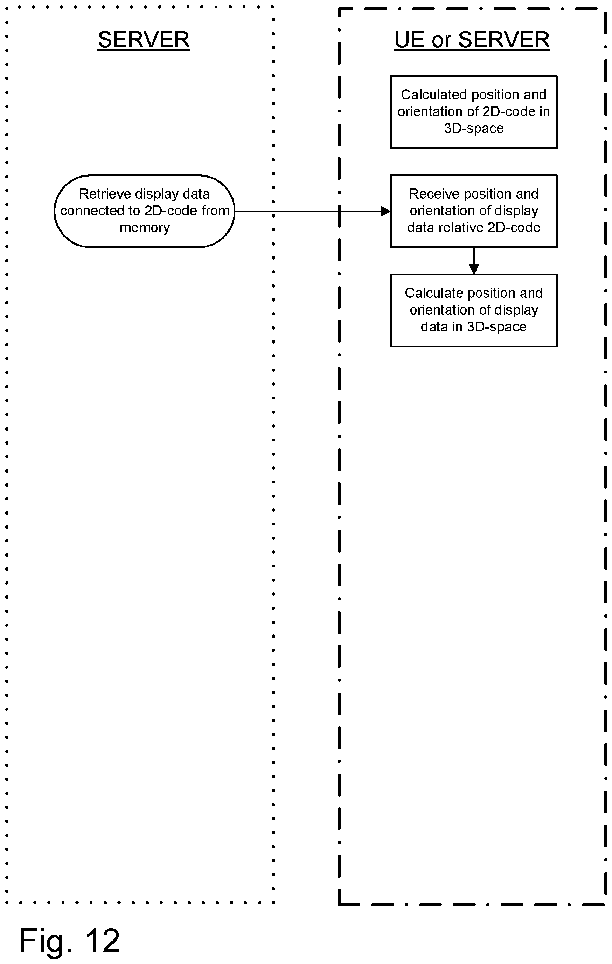

As shown in Fig. 12, calculating the position and orientation of the display data in 3D space may be performed by the user equipment or the server.

The calculated position and orientation of the two-dimensional code in 3D space may be saved by either the user equipment, if the user equipment performs the position and orientation calculation of the display data in 3D space, or the server, if the server performs the position and orientation calculation of the display data in 3D space.

The server may retrieve the display data connected to the two-dimensional code from memory. The position and orientation of the retrieved display data relative the two-dimensional code may then be either sent to the user equipment, or used by the server for calculating the position and orientation of the display data in 3D space.

A system for assigning data to a two-dimensional code according to one embodiment comprises a two-dimensional code and a computer server 1. The two-dimensional code is configured to be scanned by a user equipment 2. The computer server 1 comprises a memory 11 configured to store information about the two-dimensional code, and display data connected to the two-dimensional code. The server 1 is configured to receive a display data request from a user equipment 2 that has scanned the two-dimensional code. The server 1 is configured to check if the two-dimensional code is indicated as active in the stored information about the two-dimensional code in the memory 11. If the two-dimensional code is indicated as active, the computer server 1 is configured to send the display data stored in the memory 11 to the user equipment 2.

A system for assigning data to a two dimensional code according to one embodiment comprises a two-dimensional code, a computer server 1, and a user equipment 2. The computer server 1 comprises a memory 11 configured to store information about the two-dimensional code, and display data connected to the two-dimensional code. The server 1 is configured to receive a display data request from the user equipment 2 when the user equipment 2 has scanned the two-dimensional code. The computer server 1 is configured to check if the two-dimensional code is indicated as active in the stored information. If the two-dimensional code is indicated as active, the computer server 1 is configured to send the display data stored in the memory 11 to the user equipment 2. The user equipment 2 is configured to scan the two-dimensional code. The user equipment 2 is configured to send a display data request to the server 1. If the server 1 sends display data to the user equipment 2, the user equipment 2 is configured to receive the display data from the server 1. The user equipment 2 is configured to display the display data.

## Claims

1. A computer-implemented method for assigning data to a two-dimensional code, performed by a computer server (1), the method comprising the steps of
storing (S1) information about the two-dimensional code in a memory (11) of the computer server (1),
receiving (S2) a display data request from a user equipment (2) that has scanned the two-dimensional code,
checking (S3) if the two-dimensional code is indicated as active in the stored information about the two-dimensional code in the memory (11), and
if the two-dimensional code is indicated as active, sending (S4) display data stored in the memory (11) and connected to the two-dimensional code to the user equipment (2).

2. The method according to claim 1, wherein if the two-dimensional code is indicated active, the method further comprises the steps of
receiving user data from the user equipment (2),
checking if the user data is connected to an ownership of the two-dimensional code,
if the user data is connected to an ownership of the two dimensional code, sending edit option data to the user equipment (2) such that the option to edit data connected to the two-dimensional code is enabled on the user equipment (2).

3. The method according to any one of claims 1 or 2, wherein if the two-dimensional code is not indicated as active, the method further comprises the steps of
checking if the two-dimensional code has an owner by checking the stored information about the two-dimensional code in the memory (11),
sending an indication that the two-dimensional code is not active to the user equipment (2), and
receiving user data from the user equipment (2).

4. The method according to claim 3, wherein if the two-dimensional code is not indicated as active and the two-dimensional code does not have an owner, the method further comprises the steps of
assigning an ownership of the two-dimensional code using the user data received from the user equipment (2),
receiving display data from the user equipment (2), and
storing the display data in the memory (11) of the computer server (1) such that the display data is added or connected to the two-dimensional code.

5. The method according to any oneof claims 3 or 4, wherein if the two-dimensional code is not indicated as active and the two-dimensional code has an owner, the method further comprises the steps of
checking if the user data sent from the user equipment (2) is connected to an ownership of the two-dimensional code, and
wherein if the user data is connected to the ownership of the two-dimensional code, the method further comprises the steps of
receiving display data from the user equipment (2), and
storing the display data in the memory (11) of the computer server (1) such that the display data is added or connected to the two-dimensional code.

6. The method according to any one of claims 2, 4 or 5, further comprising the steps of
sending activation option data to the user equipment (2) such that the option to activate the two-dimensional code is enabled on the user equipment (2).

7. The method according to any one of claims 4 or 5, wherein the steps of receiving the display data from the user equipment further comprises:
A1. receiving user equipment position and orientation data in 3D space from the user equipment (2),
B1. receiving a captured image of the two-dimensional code from the user equipment (2),
C1. calculating a position and orientation of the two-dimensional code relative to the position and orientation of the user equipment (2),
D1. calculating a position and orientation of the two-dimensional code in 3D space, and
wherein if the position and orientation of the two-dimensional code is not found, repeating the steps of A1-D1 until a position and orientation is found.

8. The method according to any one of the preceding claims, wherein the step of sending display data stored in the memory (11) and connected to the two-dimensional code to the user equipment (2) further comprises:
A2. receiving user equipment position and orientation data in 3D space from the user equipment (2),
B2. receiving a captured image of the two-dimensional code from the user equipment (2),
C2. calculating a position and orientation of the two-dimensional code relative to the position and orientation of the user equipment (2),
D2. calculating a position and orientation of the two-dimensional code in 3D space, and
wherein if the position and orientation of the two-dimensional code is not found, repeating the steps of A2-D2 until a position and orientation of the two-dimensional code is found.

9. A computer-implemented method for assigning data to a two-dimensional code, performed by a user equipment (2), the method comprising the steps of
scanning the two-dimensional code,
sending a display data request to a computer server (1) that stores information about the two-dimensional code,
if the computer server (1) sends display data to the user equipment (2), receiving the display data from the computer server (1), and
displaying the display data on a display of the user equipment (2).

10. The method according to 9, the method further comprises the steps of
receiving an indication that the two-dimensional code is not active,
sending user data to the computer server (1),
sending display data to the computer server (1),
receiving activation option data from the computer server (1), and
displaying the option to activate the two-dimensional code.

11. The method according to claim 10, wherein the step of sending display data further comprises
A3. tracking a position and orientation of the user equipment (2) in 3D space,
B3. capturing an image of the two-dimensional code,
C3. calculating a position and orientation of the two-dimensional code relative to the position and orientation of the user equipment (2), and
D3. calculating a position and orientation of the two-dimensional code in 3D space; and
wherein if the position and orientation of the two-dimensional code is not found, repeating the steps of A3-D3 until a position and orientation is found.

12. The method according to claim 11, wherein the step of sending display data to the computer server (1) further comprises:
calculating the position and orientation of the display data relative to the position and orientation of the two-dimensional code,
sending the position and orientation of the display data relative to the position orientation and orientation of the two dimensional code to the computer server (1).

13. The method according to any one of claims 9-12, wherein the step of receiving display data from the computer server (1) further comprises
A4. tracking a position and orientation of the user equipment (1) in 3D space,
B4. capturing an image of the two-dimensional code,
C4. calculating a position and orientation of the two-dimensional code relative to the position and orientation of the user equipment (2),
D4. calculating a position and orientation of the two-dimensional code in 3D space, and
wherein the step of receiving display data comprises receiving display data that is based on the position and orientation of the two-dimensional code in 3D space from the computer server (1), and
wherein if the position and orientation of the two-dimensional code is not found, repeating the steps of A4-D4 until a position and orientation is found.

14. The method according to claim 13, wherein the step of receiving display data from the computer server (1) further comprises:
calculate a position and orientation for the display data in 3D space based on a position and orientation of the display data in relation to the two-dimensional code and the position and orientation of the two-dimensional code in 3D space, and
displaying the display data on a display (26) of the user equipment (2).

15. A system for assigning data to a two dimensional code, the system comprises:
a two-dimensional code configured to be scanned by a user equipment (2),
a computer server (1) comprising
a memory (11) configured to store information about the two-dimensional code, and display data connected to the two-dimensional code, and
a user equipment (2),
wherein the computer server (1) is configured to
receive a display data request from the user equipment (2) when the user equipment (2) has scanned the two-dimensional code,
check if the two-dimensional code is indicated as active in the stored information, and
if the two-dimensional code is indicated as active, send the display data stored in the memory (11) to the user equipment (2), and
wherein the user equipment (2) is configured to
scan the two-dimensional code,
send a display data request to the computer server (1),
if the computer server (1) sends display data to the user equipment (2), receive the display data from the computer server (1), and
display the display data.
